# EUROPÄISCHE PATENTANMELDUNG

(11) **EP 1 941 948 A1**
(43) Veröffentlichungstag der Anmeldung: **09.07.2008**
(21) Anmeldenummer: 06025855.5
(22) Anmeldetag: 13.12.2006
(51) Int. Cl.: B01L 9/00, B01L 3/00, G01N 35/10

(54) **Aufnahmevorrichtung für Pipettierspitzen**

(71) Anmelder: Hamilton Bonaduz AG, CH-7402 Bonaduz (CH)
(72) Erfinder: Masantschek,Ralf, Dr., 7000 Chur (CH); Panzer, Armin, 7014 Trin (CH); Gringer, Christoph, 7000 Chur (CH); Seeber, Johann, 7180 Disentis (CH)
(74) Vertreter: Trossin, Hans-Jürgen

(57) **Zusammenfassung**

Eine Aufnahmevorrichtung für Pipettierspitzen, mit einem Pipettierspitzenträger (18), welcher eine Mehrzahl von sich jeweils längs einer Aufnahmelängsachse (AL) erstreckenden Pipettierspitzenaufnahmen aufweist, wobei in die Aufnahmen Pipettierspitzen (22, 24) einführbar und aus diesen entnehmbar sind und wobei in dem Pipettierspitzenträger (18) wenigstens eine Pipettierspitze (22, 24) als Aktiv-Pipettierspitze (22) zur Entnahme auswählbar ist, weist eine Verstelleinrichtung (20) auf, mit welcher wenigstens eine Pipettierspitze (22, 24) aus der Mehrzahl von aufgenommenen Pipettierspitzen (22, 24) zur wahlweisen Auswahl als Aktiv-Pipettierspitze (22) oder als nicht ausgewählte Inaktiv-Pipettierspitze (24) zwischen einer Aufnahmestellung und einer sich von der Aufnahmestellung unterscheidende Auswahlstellung verstellbar ist.

## Beschreibung

Die vorliegende Erfindung betrifft eine Aufnahmevorrichtung für Pipettierspitzen mit einem Pipettierspitzenträger, welcher eine Mehrzahl von sich jeweils längs einer Aufnahmelängsachse erstreckenden Pipettierspitzenaufnahmen aufweist, wobei in die Aufnahmen Pipettierspitzen einführbar und aus diesen entnehmbar sind und wobei in dem Pipettierspitzenträger wenigstens eine Pipettierspitze als Aktiv-Pipettierspitze zur Entnahme auswählbar ist. Derartige Aufnahmevorrichtungen sind im Stand der Technik allgemein bekannt. In ihnen werden eine Mehrzahl von Pipettierspitzen für die Entnahme durch eine Pipettiervorrichtung bereitgestellt.

Bei einer Pipettiervorrichtung mit einem Einfach-Pipettierkopf, welcher lediglich eine einzige Pipettierspitze aufnehmen kann, erfolgt die Auswahl einer Pipettierspitze durch Ansteuern der gewünschten Pipettierspitze mit dem Einfach-Pipettierkopf und durch Entnahme derselben.

Es sind weiterhin Mehrfach-Pipettierköpfe in Gebrauch, welche eine Mehrzahl von Pipettierspitzen gleichzeitig aufnehmen und betreiben können. In der Regel sind Aufnahmevorrichtungen an den jeweiligen Pipettierkopf angepasst, so dass die Anzahl an in einer Aufnahmevorrichtung aufnehmbaren Pipettierspitzen in der Regel der Anzahl an von einem Mehrfach-Pipettierkopf maximal aufnehmbaren Pipettierspitzen entspricht.

Bei manchen Mehrfach-Pipettierköpfen herkömmlicher Bauart mit etwa 8 x 12, also 96, aufnehmbaren Pipettierspitzen ist es möglich, durch versetzte Anordnung des Mehrfach-Pipettierkopfs relativ zur Aufnahmevorrichtung Pipettierspitzen nur mit einem Teil der 96 Pipettierspitzenkoppelungen des Mehrfach-Pipettierkopfs aufzunehmen. Dies hat jedoch den Nachteil, dass die Lage von an den Mehrfach-Pipettierkopf angekoppelten Pipettierspitzen nicht frei wählbar ist, sondern dass in der Regel stets wenigstens eine Eck-Pipettierspitzenkoppelung aus dem Feld von 8 x 12 Pipettierspitzenkoppelungen des Mehrfach-Pipettierkopfs mit einer Pipettierspitze belegt ist.

Weiterhin sind auch Mehrfach-Pipettierköpfe mit einer orthogonal-rasterförmigen Anordnung von 16 x 24 Pipettierspitzenkoppelungen in Gebrauch. Bei diesen Mehrfach-Pipettierköpfen kann es bauartbedingt unmöglich sein, wie oben mit den 96er-Pipettierköpfen, durch versetztes Anfahren der entsprechenden Aufnahmevorrichtung nur einen Teil von bereitgestellten 384 Pipettierspitzen aufzunehmen.

Grundsätzlich kann es für bestimmte Pipettieraufgaben von Vorteil sein, wenn Pipettierspitzen nicht an allen Koppelungen eines Mehrfach-Pipettierkopfs aufgenommen werden müssen, sondern lediglich gezielt an vorbestimmten Pipettierspitzenkoppelungen Pipettierspitzen aufgenommen werden.

Es ist daher eine Aufgabe der vorliegenden Erfindung, eine Aufnahmevorrichtung für Pipettierspitzen der eingangs genannten Art bereitzustellen, welche unabhängig von der Bauart eine Belegung von lediglich einer Untermenge von an einem Mehrfach-Pipettierkopf vorgesehenen Pipettierspitzenkoppelungen mit Pipettierspitzen ermöglicht.

Diese Aufgabe wird erfindungsgemäß gelöst durch eine gattungsgemäße Aufnahmevorrichtung, welche eine Verstelleinrichtung aufweist, mit welcher wenigstens eine Pipettierspitze aus der Mehrzahl von aufgenommenen Pipettierspitzen zur wahlweisen Auswahl als Aktiv-Pipettierspitze oder als nicht ausgewählte Inaktiv-Pipettierspitze zwischen einer Aufnahmestellung und einer sich von der Aufnahmestellung unterscheidende Auswahlstellung verstellbar ist.

Grundidee der vorliegenden Erfindung ist dabei, die wenigstens eine Pipettierspitze, die als Aktiv-Pipettierspitze für eine Entnahme aus der Aufnahmevorrichtung ausgewählt ist, in eine Auswahlstellung zu verstellen, welche dann von einem Mehrfach-Pipettierkopf angefahren wird. Somit wird lediglich die in der Auswahlstellung befindliche wenigstens eine Aktiv-Pipettierspitze mit einer Pipettierspitzenkoppelung des Mehrfach-Pipettierkopfs gekoppelt, während sich Inaktiv-Pipettierspitzen in einer anderen Stellung als der Auswahlstellung befinden, in welcher sie von den Pipettierspitzenkoppelungen des Mehrfach-Pipettierkopfs nicht erreicht werden.

Die Inaktiv-Pipettierspitzen befinden sich vorzugsweise in der Aufnahmestellung. Es soll jedoch nicht ausgeschlossen sein, dass neben der Aufnahmestellung auch noch weitere Stellungen für Inaktiv-Pipettierspitzen erreichbar sind, in welchen sie dann, wenn die wenigstens eine sich in der Auswahlstellung befindende Aktiv-Pipettierspitze an dem Mehrfach-Pipettierkopf angekoppelt wird, ebenfalls in keinen Ankoppelungszustand an den Mehrfach-Pipettierkopf gelangen können.

Aus Gründen eines möglichst einfachen konstruktiven Aufbaus der Entnahmevorrichtung ist jedoch bevorzugt, wenn die Pipettierspitzen lediglich zwischen der Aufnahmestellung und der Auswahlstellung verstellbar sind, so dass lediglich die sich in der Auswahlstellung befindenden Aktiv-Pipettierspitzen an den Mehrfach-Pipettierkopf angekoppelt werden, während die Inaktiv-Pipettierspitzen in der Aufnahmevorrichtung verbleiben.

Grundsätzlich ist es denkbar, einzelne Pipettierspitzen in der Aufnahmevorrichtung zwischen der Aufnahmestellung und der Auswahlstellung zu verstellen. Eine gegenüber dieser individuellen Verstellbarkeit vereinfachte Steuerung kann durch eine vorteilhafte Weiterbildung der obigen Aufnahmevorrichtung realisiert sein, bei welcher eine Mehrzahl von Pipettierspitzen als Untermenge aller in der Aufnahmevorrichtung aufgenommenen oder aufnehmbaren Pipettierspitzen gemeinsam zwischen der Aufnahmestellung und der Auswahlstellung verstellbar ist.

Grundsätzlich ist denkbar, die Verstelleinrichtung unmittelbar an den Pipettierspitzen angreifen zu lassen, um ausgewählte Pipettierspitzen als Aktiv-Pipettierspitzen in die Auswahlstellung zu verstellen. Aus hygienischen Gründen ist jedoch bevorzugt, dass der Pipettierspitzenträger relativ zueinander bewegliche Teilpipettierspitzenträger umfasst, wobei die Verstelleinrichtung dazu ausgebildet ist, wenigstens einen Teilpipettierspitzenträger zur wahlweisen Auswahl als Aktiv-Teilpipettierspitzenträger oder Inaktiv-Teilpipettierspitzenträger zwischen einer der Aufnahmestellung der Pipettierspitzen zugeordneten Grundstellung und einer sich von dieser unterscheidenden, der Auswahlstellung der Pipettierspitzen zugeordneten Aktivstellung zu verlagern.

In diesem Falle wird eine ausgewählte Aktiv-Pipettierspitze durch die Verstelleinrichtung nicht unmittelbar, sondern mittelbar über den Teilpipettierspitzenträger, in welchem sie sich befindet, in die Auswahlstellung verbracht. Hierzu wird der zugeordnete Teilpipettierspitzenträger in seine Aktivstellung verlagert, wobei dann, wenn der Teilpipettierspitzenträger sich in der Aktivstellung befindet, sich eine oder mehrere darin aufgenommene Pipettierspitzen in der Auswahlstellung befinden.

Analog hierzu gilt, dass dann, wenn sich ein Teilpipettierspitzenträger in der Grundstellung befindet, sich eine oder mehrere darin aufgenommene Pipettierspitzen in der Aufnahmestellung befinden.

Üblicherweise sind Pipettierspitzen länglich ausgebildet, mit einem koppelungsseitigen Längsende, mit welchem sie an einen Pipettierkopf ankoppelbar sind, und mit einem dem koppelungsseitigen Längsende entgegengesetzten dosierungsseitigen Längsende, mit welchem Flüssigkeit aspiriert und dispensiert wird.

Aus praktischen Gründen fällt die Aufnahmelängsachse der Pipettierspitzenaufnahmen mit der Längserstreckungsachse der Pipettierspitzen im Wesentlichen zusammen. Die Einführung von Pipettierspitzen in die sowie die Entnahme derselben aus den Pipettierspitzenaufnahmen erfolgt daher vorzugsweise ebenfalls längs der Aufnahmelängsachse.

Bei unmittelbarem Angriff der Verstelleinrichtung an den Pipettierspitzen erfolgt dieser bevorzugt am dosierseitigen Längsende, besonders bevorzugt an der Dosieröffnung der Pipettierspitze, da diese Längsenden in der Regel leicht zugänglich sind und ein einfacher Formschlusseingriff möglich ist.

Bei mittelbarem Angriff der Verstelleinrichtung an den Pipettierspitzen über den Teilpipettierspitzenträger erfolgt dieser bevorzugt im Bereich des koppelungsseitigen Längsendes, da dort in der Regel eine Geometrie ausgebildet ist, welche mit dem Teilpipettierspitzenträger bereits in Formschlusseingriff ist. Grundsätzlich ist jedoch auch ein Angriff an Zwischenbereichen der Pipettierspitzen zwischen ihren Längsenden denkbar, etwa an Abschnitten mit kegelstumpfförmiger Außenfläche der Pipettierspitze.

Die Ankoppelungsstellen für Pipettierspitzen an einem Mehrfach-Pipettierkopf sind dort üblicherweise rasterartig in zueinander orthogonalen Richtungen aufeinander folgend vorgesehen. Mit dieser Anordnung von Pipettierspitzenkoppelungen lassen sich Probenplatten mit ebenfalls rasterartig angeordneten Wells parallelisiert und somit in sehr kurzer Zeit bearbeiten.

Häufig ist daher gewünscht, dass dann, wenn der Mehrfach-Pipettierkopf nicht vollständig mit Pipettierspitzen bestückt wird, wenigstens vollständige Rasterreihen von Pipettierspitzenkoppelungen mit Pipettierspitzen belegt werden, so dass rasterartig angeordnete Wells eines Probenträgers reihenweise nacheinander mit Pipettierspitzen angefahren werden können. Dann kann in eine Untermenge aller auf einem Probenträger vorgesehenen vollständigen Well-Reihen Flüssigkeit dispensiert werden.

Hierzu kann vorgesehen sein, dass die Aufnahmen des Pipettierspitzenträgers in (vorzugsweise mehreren) Reihen jeweils in Reihenrichtung aufeinander folgend angeordnet sind, wobei ein Teilpipettierspitzenträger eine Mehrzahl von Aufnahmen, vorzugsweise alle Aufnahmen, einer derartigen Reihe umfasst. Hier soll auch der Fall erfasst sein, dass die Rasteranordnung von Pipettierspitzen in der Aufnahmevorrichtung nicht in einem orthogonalen Rastersystem (Zeilen und hierzu orthogonale Spalten) angeordnet sind. Vielmehr können die Reihen auch Reihen einer rautenförmigen Anordnung von Pipettierspitzenaufnahmen in der Aufnahmevorrichtung sein, wenngleich ein orthogonales Raster bevorzugt ist.

Zur besonders sicheren Verlagerung der Teilpipettierspitzenträger kann die Aufnahmevorrichtung einen Grundkörper umfassen, an welchem die Teilpipettierspitzenträger verlagerbar vorgesehen sind. Besonders bevorzugt umfasst der Grundkörper Führungsmittel, welche die Teilpipettierspitzenträger bei ihrer Verlagerungsbewegung zwischen der Grundstellung der Aktivstellung führen.

Grundsätzlich kann die Verstellbewegung einer Aktiv-Pipettierspitze zwischen der Aufnahmestellung und der Auswahlstellung beliebig kompliziert ausgebildet sein, solange sichergestellt ist, dass dann, wenn die sich in der Aufnahmestellung befindenden Aktiv-Pipettierspitzen an den Mehrfach-Pipettierkopf angekoppelt werden, die Inaktiv-Pipettierspitzen aufgrund ihrer von der Auswahlstellung verschiedenen Stellung von dem Koppelungsvorgang nicht erfasst werden. Besonders bevorzugt ist die Verstellbewegung so ausgebildet, dass sie eine in Richtung der Aufnahmelängsachse verlaufende Bewegungskomponente aufweist. Dadurch ist die wenigstens eine Aktiv-Pipettierspitze in ihrer Auswahlstellung bezüglich Inaktiv-Pipettierspitzen in der Aufnahmestellung in Richtung der Aufnahmelängsachse versetzt, so dass die Aktiv-Pipettierspitzen eine mechanische Blockade bilden, welche verhindert, dass die Inaktiv-Pipettierspitzen von dem Mehrfach-Pipettierkopf überhaupt erreicht werden können.

Aus dem oben genannten Grund ist es für einen einfachen Vorrichtungsaufbau besonders bevorzugt, wenn die Verstellbewegung längs der Aufnahmelängsachse der Pipettierspitzenaufnahmen verläuft. In der Regel sind alle Pipettierspitzenaufnahmen parallel zueinander angeordnet, so dass für die Aufnahmevorrichtung eine eindeutige Aufnahmelängsachse existiert.

Gleiches gilt entsprechend für die Verlagerungsbewegung wenigstens eines Teilpipettierspitzenträgers zwischen der Grundstellung und der Aktivstellung.

Um die Verstellbarkeit der wenigstens einen Pipettierspitze zwischen ihrer Aufnahmestellung und ihrer Auswahlstellung gewährleisten zu können, kann vorgesehen sein, dass die Verstelleinrichtung wenigstens einen Verstellmotor und wenigstens ein mit diesem zusammenwirkendes und von diesem zwischen einer Nichteingriffsstellung und einer Verstellstellung verstellbares Verstellmittel umfasst, durch welches wenigstens eine Pipettierspitze zwischen der Aufnahmestellung und der Auswahlstellung verstellbar ist.

Gleiches gilt entsprechend zur Sicherstellung der Verlagerbarkeit des wenigstens einen Teilpipettierspitzenträgers zwischen der Grundstellung und der Aktivstellung.

Grundsätzlich kann für jede einzelne Pipettierspitzenaufnahme ein gesonderter Verstellantrieb vorgesehen sein, etwa ein Schraubgewindetrieb, so dass jede Pipettierspitze einzeln und unabhängig von anderen Pipettierspitzen verstellbar ist. Ebenso kann für Gruppen von Pipettierspitzen jeweils ein Verstellantrieb vorgesehen sein, mit welchem eine zugeordnete Mehrzahl von Pipettierspitzen gleichzeitig und gemeinsam zur Verstellbewegung antreibbar ist.

Entsprechendes gilt für die oben genannten Teilpipettierspitzenträger. Auch hier kann für jeden Teilpipettierspitzenträger ein gesonderter zugeordneter Verstellantrieb vorgesehen sein, so dass jeder einzelne Teilpipettierspitzenträger gesondert und unabhängig von anderen Teilpipettierspitzenträgern verlagerbar ist. Entsprechendes gilt jeweils für Gruppen von Teilpipettierspitzenträgern.

Alle diese oben genannten Möglichkeiten bieten zwar einen erheblichen Komfort und maximale Auswahlmöglichkeiten von Pipettierspitzen, sind jedoch durch die Vielzahl von notwendigen Verstellantrieben und der hierfür erforderlichen Steuerung sehr teuer.

Deshalb ist es aus Kostengründen vorteilhaft, wenn die Verstelleinrichtung beweglich an der Aufnahmevorrichtung vorgesehen ist. Dann ist nämlich ein Verstellmotor für alle Pipettierspitzen bzw. Teilpipettierspitzenträger mit einem oder mit zumindest wenigen Verstellmitteln ausreichend, um eine beliebige Pipettierspitze oder einen beliebigen Teilpipettierspitzenträger zu verstellen bzw. zu verlagern. Die Verstelleinrichtung wird dann lediglich innerhalb der Aufnahmevorrichtung an die gewünschte Stelle bewegt, in welcher sie mit der gewünschten wenigstens einen Pipettierspitze oder dem gewünschten wenigstens einen Teilpipettierspitzenträger in Eingriff gelangen kann.

Zur Verstellung von Pipettierspitzen oder von Teilpipettierspitzenträgern haben sich Exzenternocken als besonders geeignet erwiesen. Daher ist es bevorzugt, dass das Verstellmittel wenigstens einen um eine Exzenternockendrehachse drehbaren Exzenternocken umfasst.

Aus Kostengründen ist, wie oben dargelegt wurde, die Verlagerbarkeit von Teilpipettierspitzenträgern gegenüber der Verstellbarkeit einzelner Pipettierspitzen bevorzugt. Um sicherzustellen, dass jeder Teilpipettierspitzenträger durch die beweglich an der Aufnahmevorrichtung vorgesehene Verstelleinrichtung erreichbar ist, kann die Aufnahmevorrichtung derart ausgebildet sein, dass aus einer Mehrzahl von Teilpipettierspitzenträgern sich jeder längs einer Reihenrichtung erstreckt, wobei die Reihenrichtung einen Winkel mit der Aufnahmelängsrichtung einschließt, wobei die Bewegungsrichtung der Verstelleinrichtung eine Komponente aufweist, welche einen Winkel sowohl mit der Reihenrichtung als auch mit der Aufnahmelängsrichtung einschließt. Vorzugsweise sind dabei die Reihenrichtung, die Aufnahmelängsrichtung und die Bewegungsrichtung der Verstelleinrichtung orthogonal zu einander.

Eine besonders dichte Anordnung von Führungsmitteln, welche formschlüssig Teilpipettierspitzenträger längs ihrer Verlagerungsbewegung führen, kann dadurch erreicht werden, dass aus einer Mehrzahl von Teilpipettierspitzenträgern sich jeder längs einer zur Richtung der Aufnahmelängsachse im Wesentlichen orthogonalen Erstreckungsrichtung erstreckt, und eine Mehrzahl von Teilpipettierspitzenträgern orthogonal sowohl zu dieser Erstreckungsrichtung als auch zur Richtung der Aufnahmelängsachse aufeinander folgend angeordnet sind, wobei unmittelbar aufeinander folgende Teilpipettierspitzenträger längs ihrer Erstreckungsrichtung zueinander versetzt angeordnet sind.

Dabei kann der für die Anordnung von Teilpipettierspitzenträgern in der Aufnahmevorrichtung benötigte Raumbedarf gering gehalten werden, wenn aufeinander folgend angeordnete Teilpipettierspitzenträger um denselben Versetzungsbetrag, jedoch mit alternierender Versetzungsrichtung zueinander versetzt sind.

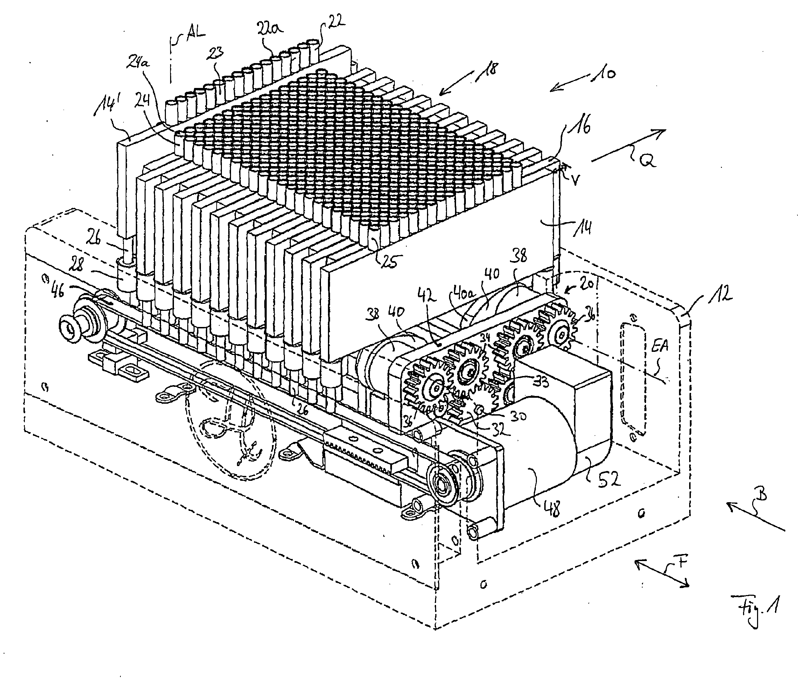

Im Folgenden wird die vorliegende Erfindung anhand eines in der beiliegenden Fig. 1 dargestellten Ausführungsbeispiels erläutert. Es stellt dar:
- Fig. 1:: Eine perspektivische teilweise transparente Ansicht einer erfindungsgemäßen Aufnahmevorrichtung.

In Fig. 1 ist eine erfindungsgemäße Ausführungsform einer Aufnahmevorrichtung allgemein mit 10 bezeichnet.

Die Aufnahmevorrichtung 10 umfasst ein Gehäuse 12, an welchem ein aus mehreren Teilpipettierspitzenträgern 14 und 16 gebildeter Pipettierspitzenträger 18 aufgenommen ist. In dem Gehäuse 12 ist eine Verstelleinrichtung 20 vorgesehen.

Der Pipettierspitzenträger 18 umfasst in einem rechteckigen orthogonalen Raster in zueinander orthogonalen Zeilen und Spalten angeordnete Aufnahmen, in welchen Pipettierspitzen 22 und 24 aufgenommen sind. Zu sehen sind von den aufgenommenen Pipettierspitzen 22, 24 lediglich deren den jeweiligen koppelungsseitigen Längsenden 22a, 24a nahe Bereiche, welche als im Wesentlichen zylindrische Krägen 23 bzw. 25 ausgebildet sind und formschlüssig auf den Teilpipettierspitzenträgern 14 und 16 aufliegen. Mit diesen Krägen 23, 25 erfolgt ein Koppelungseingriff durch einen nicht dargestellten die Pipettierspitze ankoppelnden Pipettierkopf.

Die Aufnahmen für die Pipettierspitzen erstrecken sich parallel zueinander längs einer Aufnahmelängsachse AL. In dem in Fig. 1 gezeigten Beispiel umfasst der Pipettierspitzenträger 18 insgesamt 384 Aufnahmen für Pipettierspitzen, die in 24 Reihen zu je 16 Aufnahmen angeordnet sind.

Dementsprechend können, falls dies gewünscht ist, alle 384 Pipettierspitzen 22, 24 gleichzeitig durch einen Mehrfach-Pipettierspitzenkopf mit 384 Pipettierspitzenkoppelungen aus dem Pipettierspitzenträger 18 entnommen werden.

Für den Fall, dass mit dem Mehrfach-Pipettierspitzenkopf nur ein Teil der 384 Pipettierspitzen aus dem Pipettierspitzenträger 18 entnommen werden soll, sind die Teilpipettierspitzenträger 14 und 16 in Richtung der Aufnahmelängsachse AL verstellbar angeordnet. In Fig. 1 ist ein Pipettierspitzenträger 14' in eine Aktivstellung verlagert dargestellt, während die übrigen Teilpipettierspitzenträger 14 und 16 sich in ihrer Grundstellung befinden.

In dieser in Fig. 1 dargestellten Anordnung kann ein sich längs der Aufnahmelängsachse AL der Pipettierspitzen 22 annähernder Mehrfach-Pipettierkopf nur die Aktiv-Pipettierspitzen 22 des Aktiv-Teilpipettierspitzenträgers 14' ankoppeln, da sowohl die Aktiv-Pipettierspitzen 22 als auch der Aktiv-Teilpipettierspitzenträger 14' eine mechanische Bewegungsblockade für den Mehrfach-Pipettierkopf bilden, falls dieser längs der Aufnahmelängsachse AL weiter zu den Inaktiv-Pipettierspitzen 24 abgesenkt werden sollte.

Die Aktiv-Pipettierspitzen 22 im Aktiv-Teilpipettierspitzenträger 14' befinden sich somit in ihrer Auswahlstellung, während sich die Inaktiv-Pipettierspitzen 24 in den Inaktiv-Teilpipettierspitzenträgern 14 und 16 in der in Fig. 1 dargestellten Stellung in ihrer Aufnahmestellung befinden.

Wie in Fig. 1 weiter zu erkennen ist, erstrecken sich von dem Teilpipettierspitzenträger 14 und 16 ausgehend in Richtung der Aufnahmelängsachse AL von der Pipettierspitzenbereitstellungsseite weg Führungsfortsätze 26, welche Führungsbuchsen 28 durchsetzen. Die fest mit dem Gehäuse 12 verbundenen Führungsbuchsen 28 bilden außerdem Anschläge für die Teilpipettierspitzenträger 14 und 16, so dass diese in ihrer Grundstellung auf den Führungsbuchsen 28 aufliegen. Damit ist die Grundstellung der Teilpipettierspitzenträger 14 und 16 eindeutig definiert.

Obwohl die Verstelleinrichtung 20 tatsächlich bei dem Aktiv-Teilpipettierspitzenträger 14' angeordnet gezeigt sein müsste, ist zur besseren Darstellung die Verstelleinrichtung 20 in Fig. 1 in ihrer vordersten Endstellung gezeigt.

Die Verstelleinrichtung 20 umfasst einen nicht dargestellten ansteuerbaren Verstellmotor, welcher auf seiner Ausgangswelle 30 ein Antriebsritzel 32 trägt. Das Antriebsritzel 32 überträgt Antriebskraft über zwei bzw. drei Zwischenzahnräder 33, 34 zu zwei Abtriebsrädern 36, welche jeweils drehfest mit einer Abtriebswelle 38 verbunden sind, auf welchen jeweils ein Exzenternocken 40 als Verstellmittel zur mechanischen Verstellung eines sich über dem Exzenternocken 40 befindenden Teilpipettierspitzenträgers drehfest aufgenommen ist. Dadurch drehen die Exzenternocken 40 in der gleichen Drehrichtung wie die drehfest mit ihnen verbundenen Abtriebszahnräder 36. Aufgrund der Anordnung der Zwischenzahnräder 33 (nur in Bezug auf das in Fig. 1 rechte Abtriebszahnrad 36) und 34 drehen die Abtriebszahnräder 36 im gleichen bzw. entgegengesetzten Drehsinn wie das Antriebsritzel 32. Die Exzenternocken 40 drehen bei Antrieb durch den Verstellmotor somit stets gegensinnig.

In Fig. 1 sind die Exzenternocken 40 in ihrer Nichteingriffsstellung dargestellt. Durch Drehung des Anstriebsritzels 32 im Uhrzeigersinn bei Betrachtung der Vorrichtung 10 aus Richtung des Pfeils B werden die Exzenternocken 40 um etwa eine Vierteldrehung im Uhrzeigersinn in die Verstellstellung verbracht, in welcher die von der Exzenternockendrehachse EA fernst liegende Nockenfläche 40a in Eingriff mit einer unteren Fläche eines zugeordneten Teilpipettierspitzenträgers 14 bzw. 16 ist, so dass dieser, wie der Aktiv-Teilpipettierspitzenträger 14' in Fig. 1 in die Aktivstellung verstellt ist.

Alle Drehachsen der in Fig. 1 dargestellten Zahnräder einschließlich des Antriebsritzels 32 sind zueinander sowie zur Exzenternockendrehachse EA parallel.

Der nicht dargestellte Verstellmotor sowie der oben beschriebene Verstellmechanismus aus Exzenternocken 40, Exzenternockenwelle 38, Abtriebszahnrädern 36 usw. ist auf einen Schlitten 42 montiert, welcher durch nicht näher dargestellte, an sich bekannte Führungsmittel im Gehäuse bewegbar angeordnet ist. Der Schlitten 42 wird durch ein Endlosband 46 mittels eines Bewegungsstellmotors 48 zur Bewegung angetrieben und kann durch geeignete Steuerung des Bewegungsstellmotors 48 an eine gewünschte, einem bestimmten Teilpipettierspitzenträger 14, 16 zugeordnete Stelle verfahren werden. Ein mit der nicht gezeigten Ausgangswelle des Bewegungsstellmotors 48 gekoppelter Drehstellungssensor 52 erfasst in an sich bekannter Weise die Bewegung bzw. Stellung der nicht dargestellten Ausgangswelle des Bewegungsstellmotors und liefert somit IST-Stellungsdaten der Ausgangswelle an eine nicht dargestellte Bewegungssteuerung, welche unter anderem aufgrund dieser IST-Stellungsinformation den Bewegungsstellmotor 48 betreibt, bis die Exzenternocken 40 ihre gewünschte Stellung, d.h. ihren gewünschten Teilpipettierspitzenträger 14, 16 erreicht haben.

Die Teilpipettierspitzenträger erstrecken sich zum einen längs der Aufnahmelängsachse AL sowie orthogonal hierzu längs einer Querrichtung Q, so dass sie einerseits die zur Aufnahme von Pipettierspitzen nötige Tiefe in der Aufnahmelängsrichtung AL aufweisen und außerdem die nötige Abmessung aufweisen, um in Querrichtung Q mehrere, hier 16, Pipettierspitzen aufeinander folgend aufzunehmen. Die durch die Führungsmittel vorgegebene Bewegbarkeit des Schlittens 42 ist dabei orthogonal sowohl zur Aufnahmelängsrichtung AL als auch zur Querrichtung Q. Diese Bewegbarkeit ist durch den Doppelpfeil F in Fig. 1 angezeigt.

In dieser Richtung F sind auch die Teilpipettierspitzenträger 14 und 16 aufeinanderfolgend angeordnet.

Um die Anordnung von Führungsbuchsen 28 für die Teilpipettierspitzenträger 14 und 16 zu erleichtern, sind die Teilpipettierspitzenträger 16 relativ zu den Teilpipettierspitzenträgern 14 in Querrichtung Q um einen Versetzungsbetrag V versetzt. In der dargestellten Ausführungsform folgen Teilpipettierspitzenträger 16 in der Richtung F auf einen Teilpipettierspitzenträger 14 und umgekehrt.
Zur Auswahl einer Teilmenge von Pipettierspitzen einer 16er-Reihe können die Teilpipettierspitzenträger 14, 16 in Querrichtung Q unterteilt sein. Weiterhin kann der Schlitten auf einer Art Kreuztisch bewegbar aufgenommen sein, so dass ein Verstellmittel in den zueinander orthogonalen Richtungen Q und F bewegbar ist.

## Patentansprüche

1. Aufnahmevorrichtung für Pipettierspitzen, mit einem Pipettierspitzenträger (18), welcher eine Mehrzahl von sich jeweils längs einer Aufnahmelängsachse (AL) erstreckenden Pipettierspitzenaufnahmen aufweist, wobei in die Aufnahmen Pipettierspitzen (22, 24) einführbar und aus diesen entnehmbar sind und wobei in dem Pipettierspitzenträger (18) wenigstens eine Pipettierspitze (22, 24) als Aktiv-Pipettierspitze (22) zur Entnahme auswählbar ist,
**dadurch gekennzeichnet, dass** die Aufnahmevorrichtung (10) eine Verstelleinrichtung (20) aufweist, mit welcher wenigstens eine Pipettierspitze (22, 24) aus der Mehrzahl von aufgenommenen Pipettierspitzen (22, 24) zur wahlweisen Auswahl als Aktiv-Pipettierspitze (22) oder als nicht ausgewählte Inaktiv-Pipettierspitze (24) zwischen einer Aufnahmestellung und einer sich von der Aufnahmestellung unterscheidende Auswahlstellung verstellbar ist.

2. Aufnahmevorrichtung für Pipettierspitzen nach Anspruch 1,
**dadurch gekennzeichnet, dass** eine Mehrzahl von Pipettierspitzen (22, 24) als Untermenge aller in der Aufnahmevorrichtung (10) aufgenommenen oder aufnehmbaren Pipettierspitzen (22, 24) gemeinsam zwischen der Aufnahmestellung und der Auswahlstellung verstellbar ist.

3. Aufnahmevorrichtung für Pipettierspitzen nach Anspruch 1 oder 2,
**dadurch gekennzeichnet, dass** der Pipettierspitzenträger (18) relativ zueinander bewegliche Teilpipettierspitzenträger (14, 14', 16) umfasst, wobei die Verstelleinrichtung (20) dazu ausgebildet ist, wenigstens einen Teilpipettierspitzenträger (14, 14', 16) zur wahlweisen Auswahl als Aktiv-Teilpipettierspitzenträger (14') oder Inaktiv-Teilpipettierspitzenträger (14, 16) zwischen einer der Aufnahmestellung der Pipettierspitzen (22, 24) zugeordneten Grundstellung und einer sich von dieser unterscheidenden, der Auswahlstellung der Pipettierspitzen (22, 24) zugeordneten Aktivstellung zu verlagern.

4. Aufnahmevorrichtung für Pipettierspitzen nach Anspruch 3,
**dadurch gekennzeichnet, dass** die Aufnahmen des Pipettierspitzenträgers (18) in vorzugsweise mehreren Reihen in Reihenrichtung (Q) aufeinander folgend angeordnet sind, wobei ein Teilpipettierspitzenträger (14, 14', 16) eine Mehrzahl von Aufnahmen, vorzugsweise alle Aufnahmen, einer derartigen Reihe umfasst.

5. Aufnahmevorrichtung für Pipettierspitzen nach einem der Ansprüche 3 oder 4,
**dadurch gekennzeichnet, dass** sie einen Grundkörper (12) umfasst, an welchem die Teilpipettierspitzenträger (14, 14', 16), durch Führungsmittel (28) geführt, verlagerbar vorgesehen sind.

6. Aufnahmevorrichtung für Pipettierspitzen nach einem der vorhergehenden Ansprüche,
**dadurch gekennzeichnet, dass** die Verstellbewegung wenigstens einer Pipettierspitze (22, 24) zwischen der Aufnahmestellung und der Auswahlstellung eine in Richtung der Aufnahmelängsachse (AL) verlaufende Bewegungskomponente aufweist, vorzugsweise längs der Aufnahmelängsachse (AL) verläuft.

7. Aufnahmevorrichtung für Pipettierspitzen nach Anspruch 6 und einem der Ansprüche 3 bis 5,
**dadurch gekennzeichnet, dass** die Verlagerungsbewegung wenigstens eines Teilpipettierspitzenträgers (14, 14', 16) zwischen der Grundstellung und der Aktivstellung eine in Richtung der Aufnahmelängsachse (AL) verlaufende Bewegungskomponente aufweist, vorzugsweise längs der Aufnahmelängsachse (AL) verläuft.

8. Aufnahmevorrichtung für Pipettierspitzen nach einem der vorhergehenden Ansprüche,
**dadurch gekennzeichnet, dass** die Verstelleinrichtung (20) wenigstens einen Verstellmotor und wenigstens ein mit diesem zusammenwirkendes und von diesem zwischen einer Nichteingriffsstellung und einer Verstellstellung verstellbares Verstellmittel (40) umfasst, durch welches wenigstens eine Pipettierspitze (22, 24) zwischen der Aufnahmestellung und der Auswahlstellung verstellbar ist.

9. Aufnahmevorrichtung für Pipettierspitzen nach Anspruch 7 und 8 und einem der Ansprüche 3 bis 6,
**dadurch gekennzeichnet, dass** die Verstelleinrichtung (20) wenigstens einen Verstellmotor und wenigstens ein mit diesem zusammenwirkendes und von diesem zwischen einer Nichteingriffsstellung und einer Verstellstellung verstellbares Verstellmittel (40) umfasst, durch welches wenigstens ein Teilpipettierspitzenträger (14, 14', 16) zwischen der Grundstellung und der Aktivstellung verlagerbar ist.

10. Aufnahmevorrichtung für Pipettierspitzen nach Anspruch 8 oder 9,
**dadurch gekennzeichnet, dass** das Verstellmittel (20) wenigstens einen Exzenternocken (40) umfasst, welcher um eine Exzenternockendrehachse (EA) drehbar ist.

11. Aufnahmevorrichtung für Pipettierspitzen nach einem der vorhergehenden Ansprüche,
**dadurch gekennzeichnet, dass** die Verstelleinrichtung (20) beweglich an der Aufnahmevorrichtung (10) vorgesehen ist.

12. Aufnahmevorrichtung für Pipettierspitzen nach Anspruch 11, unter Einbeziehung der Ansprüche 3 und 4,
**dadurch gekennzeichnet, dass** aus einer Mehrzahl von Teilpipettierspitzenträgern (14, 14', 16) sich jeder längs einer Reihenrichtung (Q) erstreckt, wobei die Reihenrichtung (Q) einen Winkel mit der Aufnahmelängsrichtung (AL) einschließt, wobei die Bewegungsrichtung (F) der Verstelleinrichtung (20) eine Komponente aufweist, welche einen Winkel sowohl mit der Reihenrichtung (Q) als auch mit der Aufnahmelängsrichtung (AL) einschließt, wobei vorzugsweise die Reihenrichtung (Q), die Aufnahmelängsrichtung (AL) und die Bewegungsrichtung (F) der Verstelleinrichtung (20) orthogonal zu einander sind.

13. Aufnahmevorrichtung für Pipettierspitzen nach einem der vorhergehenden Ansprüche,
**dadurch gekennzeichnet, dass** aus einer Mehrzahl von Teilpipettierspitzenträgern (14, 14', 16) sich jeder längs einer Erstreckungsrichtung (Q) erstreckt, und eine Mehrzahl von Teilpipettierspitzenträgern (14, 14', 16) orthogonal sowohl zu dieser Erstreckungsrichtung (Q) als auch zur Richtung der Aufnahmelängsachse (AL) aufeinander folgend angeordnet sind, wobei unmittelbar aufeinander folgende Teilpipettierspitzenträger (14, 16) längs ihrer Erstreckungsrichtung (Q) zueinander versetzt angeordnet sind.

14. Aufnahmevorrichtung für Pipettierspitzen nach Anspruch 13,
**dadurch gekennzeichnet, dass** aufeinander folgend angeordnete Teilpipettierspitzenträger (14, 16) um denselben Versetzungsbetrag (V), jedoch mit alternierender Versetzungsrichtung zueinander versetzt sind.
